Europäisches Patentamt

European Patent Office

Office européen des brevets

(19)

(11) Veröffentlichungsnummer : **0 033 436**
**B1**

(12) # EUROPÄISCHE PATENTSCHRIFT

(45) Veröffentlichungstag der Patentschrift :
**20.04.83**

(21) Anmeldenummer : **81100056.1**

(22) Anmeldetag : **07.01.81**

(51) Int. Cl.³ : **G 06 F 11/16,** B 61 L 7/08,
G 06 F 11/00

(54) Zweikanalige Datenverarbeitungsanordnung für Eisenbahnsicherungszwecke.

(30) Priorität : **30.01.80 DE 3003291**

(43) Veröffentlichungstag der Anmeldung :
**12.08.81 Patentblatt 81/32**

(45) Bekanntmachung des Hinweises auf die Patenterteilung : **20.04.83 Patentblatt 83/16**

(84) Benannte Vertragsstaaten :
**AT BE CH FR GB IT LI LU NL SE**

(56) Entgegenhaltungen :
**DE A 2 064 837**
**DE A 2 118 659**
**DE A 2 636 352**
**DE B 2 651 314**
**FR A 2 182 259**

(73) Patentinhaber : **SIEMENS AKTIENGESELLSCHAFT**
**Berlin und München Wittelsbacherplatz 2**
**D-8000 München 2 (DE)**

(72) Erfinder : **Strelow, Horst, Dipl.-Ing.**
**Magdeburgstr. 13**
**D-3302 Cremlingen 1 (DE).**

EP 0 033 436 B1

Jouve, 18, rue St-Denis, 75001 Paris, France

## Zweikanalige Datenverarbeitungsanordnung für Eisenbahnsicherungszwecke

Die Erfindung bezieht sich auf eine zweikanalige Datenverarbeitungsanordnung für Eisenbahnsicherungszwecke mit zwei dieselben Daten verarbeitenden Mikrocomputern, denen für zu vergleichende Informationen beider Microcomputer je ein Vergleicher zugeordnet ist, die bei übereinstimmenden Informationen über jeweils einen Ausgang ein Schaltkennzeichen ausgeben.

Die im Eisenbahnsicherungswesen eingesetzten Schaltwerke müssen vielfach Sicherheitsverantwortung übernehmen. Dies betrifft Stellwerksanlagen, Streckengeräte für die Zugbeeinflussung oder auch Einrichtungen auf den Schienenfahrzeugen selbst. Aus diesem Grunde müssen Datenverarbeitungsanlagen, die in zunehmendem Maße auch durch Mikrocomputer realisiert werden, nach anerkannten Sicherheitsprinzipien arbeiten, bei denen bei evtl. auftretenden technischen Fehlern der Prozeß, also die zu steuernde Eisenbahn, in einen für den Menschen ungefährlichen Zustand überführt wird. Dies kann beispielsweise dadurch geschehen, daß unter Anwendung der seit vielen Jahren auf dem Eisenbahnsicherungsgebiet anerkannten Sicherheitsphilosophie allen als gefährlich anerkannten Signalen hoher Signalpegel oder eine Wechselspannung zugeordnet wird, die bei einer Störung der betreffenden Datenverarbeitungsanlage auf allen Ausgabekanälen abgeschaltet wird. Hierzu sind jedoch Einrichtungen erforderlich, die eine fehlerhafte Datenverarbeitung so rechtzeitig erkennen, daß die durch eine fehlerhafte Daten verarbeitungsanlage ermittelten Steuerbefehle nicht zum steuernden Prozeß gelangen.

Bei einer bekannten Datenverarbeitungsanlage der eingangs genannten Art (DE-OS 2 319 753) wird zur Erhöhung der Verfügbarkeit der Gesamtanlage nach dem Auftreten eines Fehlers in einer ersten zweier Datenverarbeitungsanlagen auf die andere Datenverarbeitungsanlage umgeschaltet, die im Parallelbetrieb ständig mitarbeitet und von der angenommen wird, daß sie nicht zu demselben Zeitpunkt ebenfalls defekt wurde. Bei diesen bekannten 2v2-Systemen kann nur unter Anwendung eines besonderen Aufwandes festgestellt werden, welche von den beiden Datenverarbeitungsanlagen im Störungsfall ein falsches Ergebnis lieferte.

Im Hinblick auf die erforderliche Sicherheit kann nun keine Beschränkung dahingehend erfolgen, daß nur bestimmte Anlagenteile eines verdoppelten Datenverarbeitungssystems abgeschaltet werden, weil hierfür kein genügend sicherer Fehlererkennungsmechanismus enthalten ist. Es hätte daher auch keinen Zweck, mit nur einem sicher als intakt erkannten Rechner weiterzuarbeiten, weil dieser aus Mangel eines sicheren Fehlererkennungsmechanismus in Alleinarbeit Gefährdungen für den Menschen und das Material verursachen kann.

Der Erfindung liegt daher die Aufgabe zugrunde, eine zweikanalige Datenverarbeitungsanordnung der eingangs genannten Art für die Verwendung auf dem Gebiete des Eisenbahnsicherungswesens dahingehend zu verbessern, daß unter Verwendung von nicht sicheren Vergleichern und Vermeidung spezieller Bausteine gewährleistet wird, daß bei einer festgestellten Signaldiskrepanz zwischen den beiden Datenverarbeitungsanlagen mit Sicherheit keine den Prozeß gefährdenden Signale ausgegeben werden.

Erfindungsgemäß wird die Aufgabe dadurch gelöst, daß an den Ausgang jedes der beiden Vergleicher ein UND-Glied angeschlossen ist, von dem jeweils ein zweiter Eingang einen informationslosen Puls erhält, daß jedem der UND-Glieder ein gesonderter Impulsverstärker nachgeschaltet ist, von denen der eine die für seinen Betrieb erforderliche Energie aus einer Stromversorgungsquelle und der andere aus den transformatorisch ausgekoppelten und gleichgerichteten Ausgangssignalen des erstgenannten Impulsverstärkers erhält, und daß zwischen den Ausgängen eines der beiden Mikrocomputer und den die Signale aufnehmenden Einrichtungen aktive Ausgabeschaltungen mit transformatorischer Signalauskopplung vorgesehen sind, deren Stromversorgung transformatorisch über den Ausgangskreis des zweiten Impulsverstärkers erfolgt.

In vorteilhafter Weise kann jedes der beiden UND-Glieder hinsichtlich der Stromversorgung mit einem informationslosen Puls mit der Taktstromversorgung des zugeordneten Mikrocomputers verbunden sein. Der besondere Vorteil der erfindungsgemäßen zweikanaligen Datenverarbeitungsanordnung liegt in der besonders einfachen Verknüpfung der beiden Kanäle über die Stromversorgung von Impulsverstärkern, so daß auch infolge von Bauteilausfällen in diesen Baugruppen in unerwünschter Weise kein ordnungsgerechter Zustand vorgetäuscht werden kann.

Eine vorteilhafte Weiterbildung der Erfindung sieht vor, daß der Ausgang des einen und des anderen UND-Gliedes jeweils mit einem Eingang des zugeordneten Mikrocomputers verbunden ist. Durch eine derartige Rückführung der an den Ausgängen der beiden UND-Glieder bei ordnungsgerechtem Zustand des gesamten Schaltwerkes vorhandenen Impulse an die zugeordnete Verarbeitungseinheit ist es möglich, von Zeit zu Zeit eine kanalspezifische Überprüfung vorzunehmen. Die jeweilige Prüfdauer muß dabei kleiner sein als die kleinste Reaktionszeit von Stellgliedern der durch die Datenverarbeitungsanlage gesteuerten Eisenbahnanlage.

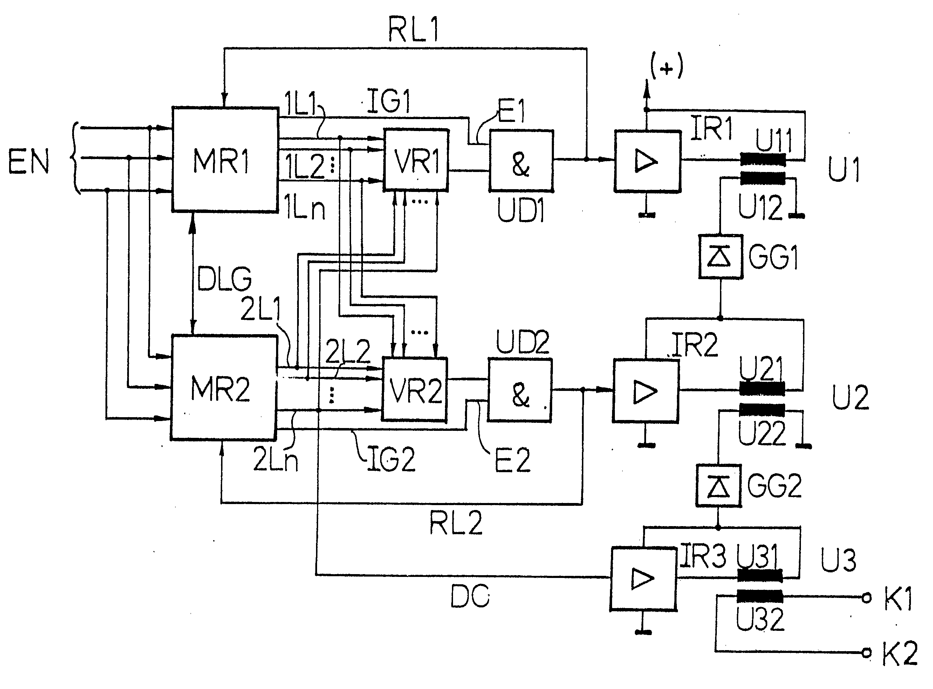

Ein Ausführungsbeispiel der Erfindung ist in der Zeichnung dargestellt und wird nachstehend näher erläutert. Das Blockschaltbild zeigt im linken Teil zwei Mikrocomputer MR1 und MR2 einer zweikanaligen Datenverarbeitungsanordnung, die über Eingangsleitungen EN, die praktisch stellvertretend sind für eine Vielzahl von Eingangsleitungen, alle diejenigen Informationen erhält, die zur Steuerung einer Eisenbahnsicherungsanlage von Wichtigkeit sind. Ebenfalls stellvertretend für eine Vielzahl von Leitungen ist an den Mikrocomputer MR2 eine Datenausgangsleitung DG angeschlossen, deren Informationen an zwei als Datenausgang dienenden Klemmen K1 und K2 für ein Stellglied der Eisenbahnsicherungsanlage zur Verfügung stehen. Verschiedene Ausgänge des Mikrocomputers MR1 sind mit 1L1, 1L2 bis 1Ln und beim Mikrocomputer MR2 mit 2L1, 2L2 bis 2Ln bezeichnet. Diese Ausgänge können die vielfältigsten Signale führen, z. B. Daten und/oder Steuerinformationen oder auch Adressen. Alle diese Informationen sind geeignet, jeweils paarweise verglichen zu werden, damit möglichst frühzeitig eine Diskrepanz in der Arbeitsweise der beiden Mikrocomputer MR1 und MR2 festgestellt werden kann. Zum Zwecke der Fehlererkennung sind den beiden Mikrocomputern MR1 und MR2 zwei Vergleicher VR1 und VR2 zugeordnet. Beide sind mit den Ausgängen 1L1 bis 1Ln und 2L1 bis 2Ln der Mikrocomputer MR1 und MR2 verbunden. Wesentlich ist nun für das vorliegende 2v2-System, daß mit Hilfe der Vergleicher VR1, VR2, die nicht unbedingt aus fehlersicheren Bausteinen aufgebaut sein müssen, Schaltkennzeichen abgeleitet werden, die es im Fehlerfall gestatten, daß mit Sicherheit an den Klemmen K1 und K2 kein Signal für das zu steuernde Stellelement (nicht dargestellt) ausgegeben wird. So ist an den Vergleicher VR1 bzw. VR2 ein UND-Glied UD1 bzw. UD2 angeschlossen, welches über einen zweiten Eingang E1 bzw. E2 und eine Steuerleitung IG1 bzw. IG2 mit dem in dem betreffenden Verarbeitungskanal vorhandenen Mikrocomputer MR1 bzw. MR2 verbunden ist. Über die Steuerleitung IG1 bzw. IG2 gelangen auf das zugeordnete UND-Glied UD1 bzw. UD2 informationslose Impulse aus der Taktstromversorgung des zugeordneten Mikrocomputers MR1 bzw. MR2 ; es wäre aber auch eine gemeinsame gesonderte Impulsquelle denkbar. Durch diese Schaltungsmaßnahme wird erreicht, daß am Ausgang des UND-Gliedes UD1 bzw. UD2 immer dann rechteckförmige Signale anstehen, wenn der Vergleicher VR1 bzw. VR2 einen ordnungsgerechten Zustand festgestellt hat, also von beiden Mikrocomputern MR1 und MR2 gleichartige Signale vorliegen. Die von den UND-Gliedern UD1 und UD2 dann ausgegebenen Rechtecksignale gelangen jeweils auf einen ersten bzw. zweiten Impulsverstärker IR1, IR2. Der Impulsverstärker IR1 ist hinsichtlich der Energieversorgung an eine vorhandene Spannungsquelle angeschlossen ; dies ist durch ein in Klammern gesetztes Pluszeichen angedeutet. Der zweite Impulsverstärker IR2 wird nicht aus dieser Spannungsquelle gespeist ; vielmehr erfolgt die Energiezufuhr aus dem Ausgangskreis des ordnungsgerecht arbeitenden Impulsverstärkers IR1, der zu dem Zweck selbstverständlich mit Rechtecksignalen angesteuert werden muß. Zum Zwecke der Energieversorgung ist im Ausgangskreis des Impulsverstärkers IR1 ein Transformator U1 vorgesehen mit einer Primärwicklung U11 und einer Sekundärwicklung U12. An die letztgenannte ist eine Gleichrichterschaltung GG1 angeschlossen, die wiederum den Impulsverstärker IR2 sowie die Primärwicklung U21 eines im Ausgangskreis des letztgenannten Verstärkers IR2 liegenden Transformators U2 speist. Die Sekundärwicklung U22 dieses Transformators speist schließlich über eine weitere Gleichrichterschaltung GG2 einen an die Datenausgangsleitung DG angeschlossenen Impulsverstärker IR3 sowie die Primärwicklung U31 eines weiteren Transformators U3, an dessen Sekundärwicklung U32 die den Daten ausgang bildenden Klemmen K1 und K2 angeschlossen sind. Selbstverständlich sind im praktischen Betrieb wesentlich mehr Ausgangsleitungen entsprechend der Datenausgangsleitung DG vorgesehen. In dem Fall ist auch eine Vielzahl von Impulsverstärkern einzusetzen, die vorzugsweise über die Gleichrichterschaltung GG2 mit Energie versorgt werden.

Charakteristisch ist für die oben beschriebene zweikanalige Datenverarbeitungsanordnung, daß nicht nur dann die Ausgabe von Signalen unterbleibt, wenn einer der Mikrocomputer MR1 bzw. MR2 fehlerhaft arbeitet, sondern auch dann, wenn infolge eines Fehlers beim Vergleicher VR1 bzw. VR2 das diesem nachgeschaltete UND-Glied UD1 bzw. UD2 abgeschaltet wird. Denn auch bei einem Fehler bei den letztgenannten UND-Gliedern oder in einem diesen nachgeschalteten Impulsverstärkern IR1 und IR2 unterbleibt die im Fehlerfall nicht gewünschte Datenausgabe.

Sowohl an den Ausgang des UND-Gliedes UD1 als auch beim UND-Glied UD2 ist eine Leitung RL1 bzw. RL2 angeschlossen, die mit dem zugehörigen Mikrocomputer MR1 bzw. MR2 verbunden ist. Mit Hilfe einer derartigen Rückführung ist es möglich, von Zeit zu Zeit die Funktionsfähigkeit des Vergleichers VR1 bzw. VR2 und des jeweiligen UND-Gliedes UD1 bzw. UD2 durch absichtlich ungleich ausgegebene Daten kanalspezifisch zu überprüfen, so daß sichergestellt ist, daß der betreffende Vergleicher bei im Fehlerfall anstehenden antivalentem Signalpaar auch wirklich kein Ausgangssignal mehr abgibt, so daß der nachgeschaltete Impulsverstärker IR1 bzw. IR2 abgeschaltet wird. Die Prüfdauer muß bei diesem Test kleiner sein als die kleinste Reaktionszeit des an die Klemmen K1 und K2 angeschlossenen Stellgliedes.

Aufgrund der erläuterten Prüfung ist es in vorteilhafter Weise möglich, die zweikanalige Datenverarbeitungsanordnung unabhängig vom betrieblichen Geschehen, also unabhängig vom Datenfluß, auf ordnungsgerechtes Arbeiten fortlaufend in regelmäßigen Zeitabständen zu prüfen und somit frühzeitig einen ersten Fehler in einem der Schaltungsteile VR1, VR2, UD1 bzw. UD2 zu entdecken. Dann kann über eine die beiden Mikrocomputer MR1 und MR2 verbindende Datenaustauschleitung DLG ein derartiger Datenaustausch erfolgen, daß es zur Abschaltung des gesamten Systems kommt. Dies ist beispielsweise dadurch möglich, daß die beiden Vergleicher VR1 und VR2 hinsichtlich ihrer Eingangssignale in einen festgelegten Ungleichzustand versetzt werden, der auch dann erhalten bleibt, wenn beide Mikrocomputer MR1 und MR2 abgeschaltet werden.

Empfangen die Mikrocomputer MR1 und MR2 über die Leitungen RL1 bzw. RL2 außerhalb der Prüfintervalle Ungleichsignale, so können sie in einem definierten Zustand, z. B. Verarbeitungsstillstand, übergehen, der das Blockieren der informationslosen Pulse über die Leitungen IG1 bzw. IG2 mit einschließt. Solange wenigstens einer der informationslosen Pulse über eine der Leitungen IG1 bzw. IG2 ausbleibt oder wenigstens einer der Vergleicher VR1 bzw. VR2 dauerhaft « ungleich » meldet und das jeweils nachgeschaltete UND-Glied UD1 bzw. UD2 sperrt, bleibt der Eingang des zugehörigen Impulsverstärkers IR1 bzw. IR2 dauerhaft blockiert, wodurch die Gleichrichterschaltung GG1, nicht mehr mit Energie versorgt wird. Mit Sicherheit trifft dies besonders für die Gleichrichterschaltung GG2 zu.

**Ansprüche**

1. Zweikanalige Datenverarbeitungsanordnung für Einsenbahnsicherungszwecke mit zwei dieselben Daten verarbeitenden Mikrocomputern (MR1, MR2), denen für zu vergleichende Informationen beider Mikrocomputer je ein Vergleicher (VR1, VR2) zugeordnet ist, die bei übereinstimmenden Informationen über jeweils einen Ausgang ein Schaltkennzeichen ausgeben, dadurch gekennzeichnet, daß an den Ausgang jedes der beiden Vergleicher (VR1, VR2) ein UND-Glied (UD1, UD2) angeschlossen ist, von dem jeweils ein zweiter Eingang (E1, E2) einen informationslosen Puls erhält, daß jedem der UND-Glieder (UD1, UD2) ein gesonderter Impulsverstärker (IR1, IR2) nachgeschaltet ist, von denen der eine (IR1) die für seinen Betrieb erforderliche Energie aus einer Stromversorgungsquelle (+) und der andere aus den transformatorisch ausgekoppelten und gleichgerichteten Ausgangssignalen des erstgenannten Impulsverstärkers (IR1) erhält, und daß zwischen den Ausgängen eines der beiden Mikrocomputer (MR2) und den die Signale aufnehmenden Einrichtungen aktive Ausgabeschaltungen (IR3) mit transformatorischer (U3) Signalauskopplung vorgesehen sind, deren Stromversorgung transformatorisch über den Ausgangskreis des zweiten Impulsverstärkers (IR2) erfolgt.

2. Datenverarbeitungsanordnung nach Anspruch 1, dadurch gekennzeichnet, daß jedes der beiden UND-Glieder (UD1, UD2) hinsichtlich der Versorgung mit einem informationslosen Puls mit der Taktstromversorgung des zugeordneten Mikrocomputers (MR1, MR2) verbunden ist.

3. Datenverarbeitungsanordnung nach Anspruch 1 oder 2, dadurch gekennzeichnet, daß der Ausgang des einen und des anderen UND-Gliedes (UD1, UD2) jeweils mit einem Eingang des zugeordneten Mikrocomputers verbunden ist.

**Claims**

1. Two-channel data processing arrangement for railway safety purposes comprising two microcomputers (MR1, MR2) which process the same data and each of which is assigned a comparator (VR1, VR2) for items of information of both microcomputers which are to be compared, which comparators emit a switching characteristic respectively via an output when items of information correspond, characterised in that connected to the output of each of the two comparators (VR1, VR2) is an AND-gate (UD1, UD2) a second input (E1, E2) of which receives a data-free pulse, and that each of the AND-gates (UD1, UD2) is followed by a separate pulse amplifier (IR1, IR2), of which the one (IR1) obtains the energy required for its operation from a current supply source (+) and the other from the output signals of the first-mentioned pulse amplifier (IR1) which are transformer output coupled and rectified, and that between the outputs of one of the two microcomputers (MR2) and the devices accommodating the signals, there are arranged active transmission circuits (IR3) which have a transformer (U3) signal output coupling and whose current supply is effected via a transformer by means of the output circuit of the second pulse amplifier (IR2).

2. Data processing arrangement as claimed in claim 1, characterised in that in respect of the supply with a data-free pulse each of the two AND-gates (UD1, UD2) is connected to the clock pulse current supply of the assigned microcomputer (MR1, MR2).

3. Data processing arrangement as claimed in claim 1 or 2, characterised in that the output of the one and of the other AND-gate (UD1, UD2) is respectively connected to the input of the assigned microcomputer.

**Revendications**

1. Dispositif de traitement des données à deux canaux servant à assurer la sécurité des chemins de fer, comportant deux micro-ordinateurs (MR1, MR2) traitant les mêmes données et auxquels est associé, pour la comparaison des informations des deux micro-ordinateurs, respectivement un comparateur (VR1, VR2) qui, en cas de coïncidence des informations, délivre par l'intermédiaire de leurs sorties respectives un signal caractéristique de commutation, caractérisé en ce qu'à la sortie de chacun des deux comparateurs (VR1, VR2), est raccordé un circuit ET (UD1, UD2), dont une seconde entrée respective (E1, E2) reçoit une impulsion exempte d'informations, qu'en série et en aval de chacun des circuits ET (UD1, UD2) est branché un amplificateur d'impulsions (IR1, IR2), dont l'un (IR1) reçoit l'énergie nécessaire pour son fonctionnement à partir d'une source d'alimentation en courant (+) et dont l'autre reçoit l'énergie nécessaire pour son fonctionnement à partir des signaux de sortie, découplés par l'intermédiaire d'un transformateur et redressés, de l'amplificateur d'impulsions (IR1) cité en premier, et qu'entre les sorties de l'un des deux micro-ordinateurs (MR2) et les dispositifs recevant les signaux, il est prévu des circuits de sortie actifs (IR3) comportant un découplage des signaux réalisé au moyen d'un transformateur (U3), et dont l'alimentation en courant est réalisée par un transformateur, par l'intermédiaire du circuit de sortie du second amplificateur d'impulsions (IR2).

2. Dispositif de traitement des données selon la revendication 1, caractérisé en ce que chacun des deux circuits ET (UD1, UD2) est relié, du point de vue de son alimentation avec une impulsion exempte d'informations, à l'alimentation en courant de cadence du micro-ordinateur associé (MR1, MR2).

3. Dispositif de traitement des données selon la revendication 1 ou 2, caractérisé en ce que la sortie de l'un et de l'autre des circuits ET (UD1, UD2) est reliée respectivement à une entrée du micro-ordinateur associé.